# EUROPÄISCHE PATENTSCHRIFT

(11) **EP 3 114 057 B1**
(45) Veröffentlichungstag und Bekanntmachung des Hinweises auf die Patenterteilung: **27.02.2019**
(21) Anmeldenummer: 15791264.3
(22) Anmeldetag: 29.10.2015
(51) Int. Cl.: B65G 47/248, B65H 15/00, B65G 47/84, B65G 47/252, B23Q 7/02, B24B 7/06, B24B 9/00, B24B 9/04, B24B 27/00, B24B 41/00, B23Q 7/16

(54) **VORRICHTUNG MIT EINER WENDEEINHEIT ZUM WENDEN EINES WERKSTÜCKS UND BEARBEITUNGSVORRICHTUNG**
DEVICE COMPRISING A TURNING UNIT FOR TURNING A WORKPIECE AND MACHINING DEVICE
DISPOSITIF POURVU D'UNE UNITÉ DE RETOURNEMENT D'UNE PIÈCE À USINER ET DISPOSITIF D'USINAGE

(30) Priorität: 04.11.2014 DE 102014116017
(43) Veröffentlichungstag der Anmeldung: 11.01.2017
(73) Patentinhaber: LISSMAC Maschinenbau GmbH, 88410 Bad Wurzach (DE)
(72) Erfinder: KRUMMENAUER, Stefan, 88339 Bad Waldsee-Gaisbeuren (DE)
(74) Vertreter: Otten, Roth, Dobler & Partner mbB Patentanwälte
(86) Internationale Anmeldenummer: PCT/EP2015/075074
(87) Internationale Veröffentlichungsnummer: WO 2016/071188

(56) Entgegenhaltungen:
- EP-A2- 1 120 348
- WO-A1-91/03414
- WO-A1-2012/032265
- AT-B- 412 849
- DE-B- 1 298 447
- GB-A- 853 449
- JP-A- H03 216 416
- JP-A- 2011 256 043
- US-A1- 2002 180 142

## Beschreibung

### Stand der Technik

Eine Wendevorrichtung nach der Präambel des Anspruchs 1 ist aus JP H03 216 416 bekannt. Der Automatisierungsgrad bei der maschinellen Bearbeitung von Werkstücken wie beispielsweise metallischen plattenartigen Werkstücken durch zum Beispiel Abschleifen wird in modernen Anlagen immer höher. In der Regel müssen sämtliche Oberflächen der Werkstücke insbesondere flächige Ober- und Unterseiten gleichermaßen einheitlich bearbeitet werden und damit zugänglich sein. Bislang ist es nicht möglich, Werkstücke mit unterschiedlichen Ausgestaltungen mit einer maximalen Kantenlänge von bis circa 280 Millimetern ohne Kontrolle durch eine Person zuverlässig zu wenden. Daher ist nach einem ersten maschinellen Bearbeitungsschritt zur Bearbeitung einer Werkstück-Oberseite eine Person vor Ort notwendig, damit sichergestellt ist, dass die Werkstücke für eine anschließende unterseitige WerkstückBearbeitung gewendet sind. Dies ist unwirtschaftlich bzw. arbeitsaufwändig und im Hinblick auf eine Erhöhung eines Automatisierungsgrades bei der maschinellen Werkstückbearbeitung nachteilig.

### Aufgabe und Vorteile der Erfindung

Aufgabe der vorliegenden Erfindung ist es, die maschinelle Oberflächenbearbeitung von Werkstücken wie zum Beispiel plattenförmigen metallischen Werkstücken effektiver zu gestalten. Insbesondere soll der Automatisierungsgrad der maschinellen Oberflächen-Komplettbearbeitung von Werkstücken mit einer Kantenlänge von circa 20 bis circa 280 Millimetern erhöht werden.

Diese Aufgabe wird durch die unabhängigen Ansprüche gelöst.

Die abhängigen Ansprüche betreffen vorteilhafte Varianten der Erfindung.

Die Erfindung geht aus von einer Vorrichtung mit einer Wendeeinheit zum Wenden eines Werkstücks.

Bisher wird zum Beispiel der Ansatz verfolgt, das Werkstück an einen nach unten freien Absatz zu bewegen, so dass durch das Eigengewicht des Werkstücks unterstützt dieses zwangsweise verkippt wird, mit dem Ziel, dass das Werkstück auf einer zum Absatz tieferliegenden Fläche gewendet zum Liegen kommt. Das Wenden gelingt aber nur dann, wenn immer reproduzierbare bzw. gleiche Bedingungen herrschen. Das Gelingen hängt insbesondere ab von der Bewegungsgeschwindigkeit des Werkstücks beim Heranbewegen an den Absatz, von der Form, den Abmessungen, der Ausrichtung, der Schwerpunktlage und vom Gesamtgewicht bzw. dem Material des Werkstücks.

Der Kern der Erfindung liegt darin, dass die Wendeeinheit einen antreibbar bewegbaren Wendekörper mit Kontaktmitteln umfasst, welche mit der Bewegung des Wendekörpers auf einem gekrümmten Bewegungsweg bewegbar sind, sowie eine Führungsanordnung für eine Führung des Werkstücks beim Wendevorgang aufweist, die benachbart zu den Kontaktmitteln entlang des Bewegungsweges ausgebildet ist, so dass bei einem Wendevorgang die Kontaktmittel mit dem Werkstück derart in einen andrückenden Kontakt bringbar sind, dass bei dem Wendevorgang das Werkstück entlang des Bewegungsweges mitführbar ist. Damit kann zuverlässig und vollständig automatisiert ein Wenden von entsprechenden Werkstücken ausnahmslos erreicht werden.

Die Wendeeinheit ist ausgebildet, plattenförmige metallische Werkstücke zu wenden.

Vorteilhafterweise wird das Werkstück über den gesamten Wendevorgang über eine Hauptseite im Kontakt mit den Kontaktmitteln bewegungsgeführt. Dies wird erfindungsgemäß ausnahmslos für sämtliche Formen und Abmessungen des Werkstücks erreicht, die innerhalb von vorgebbaren Auslegungsgrenzen der erfindungsgemäßen Wendeeinheit liegen. Ein Kippen um einen Punkt oder eine Linie mit einer Fallbewegung im freien Raum, was zu undefinierten Bewegungszuständen führt, findet nicht statt.

Mit dem Zusammenspiel der Kontaktmittel mit dem Werkstück einerseits und der Führungsanordnung mit dem Werkstück andererseits über einen Teil des Bewegungsweges oder insbesondere über den gesamten Bewegungsweg beim Wenden, wird das Werkstück immer definiert bewegt und kann damit auch keine ungewollte räumliche Ausrichtung einnehmen. Das Werkstück bleibt beim Wendevorgang ununterbrochen und vorteilhaft über die gesamte betreffende Hauptseite bzw. Oberfläche mit den Kontaktmitteln in Kontakt, insbesondere über die gesamte Fläche, die vor dem Wendevorgang eine Unterseite des Werkstücks bildet. Die Kontaktmittel sind in der Regel nicht über die gesamte Oberfläche der betreffenden Hauptseite des Werkstücks in Anlage, sondern partiell über eine Vielzahl von gleichmäßig verteilten Stellen oder Bereichen, zum Beispiel gemäß vielen punktuellen, flächigen und/oder linienförmigen Kontaktstellen.

Die Enden der Kontaktmittel, über die in der Regel der berührende Kontakt zum Werkstück einrichtbar ist, liegen im nicht belasteten Grundzustand bzw. ohne Werkstück-Kontakt vorteilhaft innerhalb einer geschlossenen bzw. gewölbten z. B. geometrisch regelmäßig geformten Fläche insbesondere innerhalb einer zylindrischen streifenförmigen Mantelfläche des Wendekörpers. Mit dem Verlauf dieser Fläche beim Bewegen des Wendekörpers ist auch der Bewegungsweg für das mitgenommene Werkstück bestimmt, entlang dem das Werkstück beim Wendevorgang mitgenommen wird. Die Kontaktmittel dienen zum Aufnehmen und Festhalten des Werkstücks am Wendekörper.

Mit der Erfindung lässt sich eine flächige Hauptseite des Werkstücks um 180 Winkelgrade um eine horizontale Achse gedreht ausrichten, zum Beispiel von einer horizontalen Ausrichtung der Flächen-Hauptseite nach oben, in eine horizontale Ausrichtung nach unten. Umgekehrt wird eine Hauptseite des Werkstücks, die vor einem Wendevorgang nach unten gerichtet ist, nach oben gewendet, so dass diese die Oberseite bildet und zugänglich ist für eine nachfolgende Bearbeitung.

Das Werkstück ist in der Grundform häufig vier- oder mehreckig und/oder mit einem gebogenen Randverlauf. In der Regel ist die Materialdicke des Werkstücks zwischen den flächigen Hauptseiten gleichbleibend. Über die Dicke des Werkstücks bilden sich zwischen den flächigen Hauptseiten bzw. zwischen der Ober- und der Unterseite schmale gemäß dem Dickenmaß ausgebildete Schmalseiten, die regelmäßig rechtwinklig zu den Hauptseiten stehen.

Mit der Wendeeinheit findet eine definierte Bewegung des Werkstücks statt, wobei das Werkstück überlagert zur Wendebewegung eine Bewegung in vertikaler Richtung insbesondere nach unten ausführt. Vorteilhaft befindet sich das Werkstück nach dem Ende der Wendebewegung des Werkstücks komplett gewendet und lotrecht nach unten vertikal versetzt verglichen mit dem Zustand unmittelbar vor Beginn des Wendevorgangs bzw. mit Beginn der Mitführbewegung des Werkstücks durch die Wendeeinheit.

Die Vorrichtung bzw. die Wendeeinheit kann insbesondere zwischen zwei Einheiten einer Bearbeitungseinrichtung zum maschinellen Oberflächenbearbeiten vorhanden sein. Dabei kann das Werkstück von einer Aufgabestelle für das Werkstück bis an eine Entnahmestelle für das Werkstück transportiert werden, zwischen denen mit dem Durchlauf durch die Bearbeitungseinrichtungen von oben zugängliche Oberflächenbereiche bzw. die Oberseite und anschließend nach dem Wendevorgang mit der erfindungsgemäßen Wendevorrichtung die dann nach oben gewendeten Oberflächenbereiche bearbeitet werden, womit sämtliche Oberflächen des Werkstücks automatisiert einer maschinellen Bearbeitung zugeführt sind.

Die Führungsanordnung ist gegenüber den Kontaktmitteln insbesondere benachbart bzw. gegenüberliegend über einen Abstand beabstandet von diesen, der im Bereich einer Dicke der zu wendenden Werkstücke liegt. Mit der Führungsanordnung können insbesondere Werkstückbewegungen nach außen bzw. weg von dem Wendekörper vermieden bzw. aufgefangen werden, welche z. B. aufgrund von auf das Werkstück beim Wenden wirkenden Gewichtskräften zu berücksichtigen sind. Insbesondere weist die Führungsanordnung zu den Kontaktmitteln einen gleichbleibenden oder nahezu gleichbleibenden Abstand auf, über die Länge des gekrümmten Bewegungsweges. Insbesondere ist die Führungsanordnung radial nach außen beabstandet über den zumindest nahezu gesamten Bewegungsweg des vom Wendekörper mitgenommenen Werkstücks vorhanden.

Die Kontaktmittel sind in sich selbst etwas nachgiebig und derart abgestimmt, dass Werkstücke gewendet werden können, die eine Dicke aufweisen, die innerhalb eines Wertebereichs von bis zu wenigen Zentimetern liegen, insbesondere bis circa 20 Millimeter.

Bei dem Wenden verbleibt das Werkstück vorteilhaft über den gesamten Wendevorgang in andrückenden Kontakt mit den Kontaktmitteln.

Die Führungsanordnung ist insbesondere flächig und ebenfalls gekrümmt über die gesamte Erstreckung des gekrümmten Bewegungsweges ausgebildet. Damit wird auf einer Seite des Werkstücks dieses über die Kontaktmittel kontaktierend vom Wendekörper mitgenommen und auf der anderen Seite verhindert die Führungsanordnung ein Ausweichen oder Wegkippen des Werkstücks von den Kontaktmitteln.

Weiter ist es vorteilhaft, dass die Wendeeinheit ausgelegt ist, ein plattenartiges metallisches Werkstück zu wenden, das ein Breitenmaß und ein Längenmaß aufweist, das in einem Bereich zwischen circa 20 mm und circa 280 mm liegt und ein Dickenmaß in einem Bereich von circa 1 mm bis circa 20 mm aufweist. Damit wird ein Nutz- bzw. Arbeitsmaß mit der Vorrichtung bereitgestellt, für Werkstücke mit minimaler Abmessung circa 20 mm mal 20 mmm mal 1 mm bis zu einer maximalen Abmessung von circa 280 mm mal 280 mm mal 20 mm, was die Länge mal die Breite mal die Dicke des Werkstücks und sämtliche Zwischenmaße angeht.

Gerade bei diesen Größenanordnungen von metallischen plattenartigen Werkstücken ist es bislang nicht automatisiert möglich, die Werkstücke zuverlässig zu wenden.

Es ist überdies vorteilhaft, dass die Wendeeinheit einen walzenförmigen und um eine Achse rotierend antreibbaren Wendekörper umfasst. Mit einem walzenförmigen bzw. walzenartigen Wendekörper ist eine sehr kompakte und zuverlässige und trotzdem kontinuierlich arbeitende Wendeanordnung realisierbar. Mit der dazugehörigen Antriebseinheit für die Rotation der Wendewalze zum Beispiel ein Elektromotor kann die Drehzahl ggf. auch die Drehrichtung eingestellt werden. Der walzenförmige Wendekörper weist vorteilhaft einen inneren zylindrischen Walzen-Grundkörper auf mit einem Zylindermantel, an dem umfänglich die Kontaktmittel nach außen gerichtet bzw. nach außen abstehend angebracht sind. Die radial äußeren Enden der Kontaktmittel bilden ein Außenmaß bzw. einen Außendurchmesser des walzenförmigen Wendekörpers.

Die Führungsanordnung ist angetrieben bewegbar. Insbesondere ist die Führungsanordnung ein gewölbtes Flächenelement. Die Umlaufgeschwindigkeit der Führungsanordnung ist mit einem Antrieb insbesondere veränderlich einstellbar. Insbesondere entspricht die Geschwindigkeit der Führungsanordnung der Umlaufgeschwindigkeit außen an dem walzenförmigen Wendekörper. Damit lassen sich Relativbewegungen zwischen dem Werkstück und der Führungsanordnung vermeiden oder minimal halten, womit vorteilhaft Reibungsverluste minimiert sind. Die Führungsanordnung ist insbesondere entlang des gekrümmten Bewegungsweges der Kontaktmittel mit gleichbleibendem Abstand ausgebildet. Wenn ein walzenförmiger Wendekörper vorhanden ist, ist die Führungsanordnung vorteilhaft über etwa 180 Winkelgrade bzw. über einen halben Umfang außen umfänglich zur Außenseite der walzenförmigen Wendeeinheit vorhanden. Die Führungsanordnung ist insbesondere zwischen einem oberen Einlaufbereich an der Walze in Umlaufrichtung der Walze bis zu einem unteren Auslaufbereich für den Auslass des gewendeten Werkstücks ausgebildet. Demgemäß ist bei einer Wendewalze mit einem zylindrischen umfänglichen Mantel, der von den Kontaktmitteln gebildet ist, die Führungsanordnung halbschalenförmig über die Hälfte des umfänglichen Mantels der Wendewalze ausgebildet.

Weiter ist es vorteilhaft, dass die Führungsanordnung ein angetrieben umlaufendes Bandelement umfasst. Insbesondere kann die Führungsanordnung ein kontinuierlich umlaufendes bzw. ein ringförmig geschlossen geführtes Band sein. Vorteilhafterweise ist das Bandelement mit einer Spanneinrichtung versehen, mit welcher eine optimale Bandspannung eingerichtet werden kann.

Gemäß einer vorteilhaften Variante der Erfindung weist die Wendeeinheit einen um eine Rotationsachse rotierbaren Wendekörper auf, der umfänglich mit radial sich erstreckenden Kontaktelementen der Kontaktmittel ausgebildet ist. Insbesondere sind die Kontaktelemente gleichmäßig angeordnet und außen über den gesamten Umfang und die gesamte Breite des Wendekörpers wie einer Walze ausgebildet. Beispielsweise können die Kontaktelemente aus verschiedenen geeigneten Materialien bestehen und unterschiedliche Formen bzw. Abmessungen aufweisen. Vorteilhaft sind an einem Wendekörper alle Kontaktelemente untereinander identisch. Eine Mischung aus unterschiedlichen Kontaktelementen an einem Wendekörper ist aber nicht ausgeschlossen.

Für unterschiedliche Auslegungen von Wendekörpern ist der Wendekörper bevorzugt austauschbar an der Wendevorrichtung aufgenommen. Beispielsweise können die Kontaktelemente eine Vielzahl von gleichartigen schlanken, dünnen flächigen Elementen umfassen wie z. B. borstenartige oder lamellenartige Elemente. Die Flächen der Lamellen können insbesondere parallel oder schräg zur Drehachse des Wendekörpers ausgerichtet sein.

Die Kontaktelemente umfassen eine Mehrzahl von länglichen Strahlelementen. Die Strahlelemente können zum Beispiel faser-, borsten- oder stabartig sein. Mit den Strahlelementen lässt sich ein Erfassen, Mitnehmen und Halten der Werkstücke ab dem ersten Kontakt beim Aufnehmen des Werkstücks vorteilhaft erzielen.

Insbesondere sind die länglichen Strahlelemente borstenartige Strahlelemente bzw. Kontaktborsten. Insbesondere sind alle Strahlelemente einheitlich bzw. gleichartig ausgebildet. Die Strahlelemente sind insbesondere selbstrückstellend ausweichbar, elastisch bzw. biegesteif. Hierfür kommen insbesondere unterschiedliche Kunststoffe, Metalle oder Verbundmaterialien in Frage.

Die Außenform der Strahlelemente ist insbesondere zylindrisch mit einem Durchmesser im Bereich von unter einem Millimeter bis circa 1 oder 2 Millimeter. Typische Längenmaße der Strahlelemente betragen zum Beispiel ca. 10 bis 20 Zentimeter und mehr.

Die Verteilung, die Dichte bzw. die Gesamtanzahl der Strahlelemente an einem Wendekörper hängt von der Auslegung der Wendevorrichtung bzw. dem Werkstück ab.

Es ist überdies besonders vorteilhaft, dass am Wendekörper die Strahlelemente mit ihrer Längsachse in Bewegungsrichtung des Wendekörpers mit einem Winkel geneigt sind, vorzugsweise um circa 10 bis 20 Winkelgrade insbesondere um circa 15 Winkelgrade relativ zu einer radialen Richtung ausgerichtet vorhanden sind. Die radiale Richtung ist auf die Rotationsachse des Wendekörpers bzw. des Walzenkörpers bezogen. Die 15°-Neigung ist bezogen auf einen radial innen liegenden Fußpunkt bzw. ein radial inneres Ende der Strahlelemente und ist insbesondere vorteilhaft, da ein geringerer Kraftaufwand für ein Einlaufen bzw. eine Aufnahme des an den Wendekörper herangeführten Werkstücks an der Wendeeinheit nötig ist.

Insbesondere sind alle Strahlelemente entsprechend mit einer 15°-Neigung ausgerichtet. Die Strahlelemente sind vorteilhaft zumindest mit ihrem vorderen freien Ende ausweich- bzw. biegbar.

Es ist des Weiteren von Vorteil, dass die Kontaktmittel eine Mehrzahl von länglichen Strahlelementen umfassen, welche nachgiebig ausgestaltet sind. Damit kann ein besonders effektiver Anschmiege- bzw. Haftkontakt zwischen den Kontaktmitteln bzw. den Strahlelementen und dem Werkstück eingerichtet werden. Die Strahlelemente gelangen somit auch bei Werkstücken, die mit Konturen wie Erhöhungen und/oder Vertiefungen versehen sind, in den konturenbehafteten Bereichen in berührenden bzw. andrückenden Kontakt, so dass auch solche Werkstücke sicher mitgenommen, gehalten und entlang des Bewegungsweges bewegt werden können.

Die Kontaktmittel umfassen eine Mehrzahl von länglichen Strahlelementen, welche mehrere Bündel von Strahlelementen umfassen, die jeweils aus mehreren Strahlelementen gebildet sind. Die Strahlenbündel ermöglichen einen besonders effektiven Haltekontakt am Werkstück und ein punktuell variables Anschmiegen an Werkstückoberflächen. Insbesondere sind die Bündel alle gleich beabstandet zueinander. Insbesondere sind an einem Wendekörper alle Strahlelementbündel aus einer gleichen Anzahl von einzelnen Strahlelementen gebildet.

Die mehreren Strahlelemente können beispielsweise in entsprechenden Löchern in einem zylindrischen Mantel des Grundkörpers des Wendekörpers eingesteckt fixiert sein.

Die Erfindung betrifft außerdem eine Bearbeitungsvorrichtung zum automatisierten Bearbeiten von Oberflächen von Werkstücken, vorzugsweise von plattenförmigen metallischen Werkstücken, insbesondere zum Verrunden von Werkstückkanten und/oder zum Abschleifen von Werkstückoberflächen, mit einer Transportanordnung zum Bewegen des Werkstücks entlang eines Bearbeitungsweges der Bearbeitungsvorrichtung und mit angetrieben bewegbaren Bearbeitungseinheiten zum Einwirken auf das Werkstück. Die Bearbeitungsvorrichtung ist insbesondere eine Verrundungs- und/oder Schleifvorrichtungen zum Abschleifen der Werkstücke mit abrasiven Schleifkörpern. Derartige Vorrichtungen werden beispielsweise nach einem Schweiß- oder Laserschneidprozess von plattenförmigen metallischen Werkstück zur Entfernung von Graten und Schlacke und zur Kantenverrundung benötigt, bevor die Werkstücke weiter verarbeitet zum Beispiel lackiert werden.

Der wesentliche Aspekt der erfindungsgemäßen Bearbeitungsvorrichtung liegt darin, dass zwischen einer Oberseite bzw. einer ersten Bearbeitungseinheit zum automatisierten Bearbeiten einer ersten Hauptseite des Werkstücks und einer zweiten Bearbeitungseinheit zum automatisierten Bearbeiten einer Unterseite bzw. einer zweiten Hauptseite des Werkstücks eine Vorrichtung wie oben erläutert vorhanden ist. Damit lässt sich die allseitige Oberflächenbearbeitung von metallischen Werkstücken vollautomatisiert und kontinuierlich vorteilhaft erreichen, insbesondere bei flachen plattenförmigen Werkstücken mit einer maximalen Abmessung von 280 mal 280 mal 20 mmm in der Länge mal Breite mal Dicke.

### Figurenbeschreibung

Weitere Merkmale und Vorteile der Erfindung sind anhand eines in den Figuren schematisiert dargestellten Ausführungsbeispiels der Erfindung näher erläutert. Im Einzelnen zeigt:
- Figur 1: eine perspektivische Teilansicht einer erfindungsgemäßen Bearbeitungsvorrichtung zur automatisierten Bearbeitung eines metallischen Werkstücks,
- Figur 2: einen Ausschnitt der Anordnung aus Figur 1 von der Seite unter Weglassung von einzelnen Bauteilen der Vorrichtung,
- Figur 2a: ein vergrößerter Ausschnitt gemäß dem Kreisbereich A aus Figur 2 und
- Figur 3: eine erfindungsgemäße Wendevorrichtung nach der Anordnung aus Figur 1, wobei ein Gehäuseabschnitt transparent ausgeführt ist.

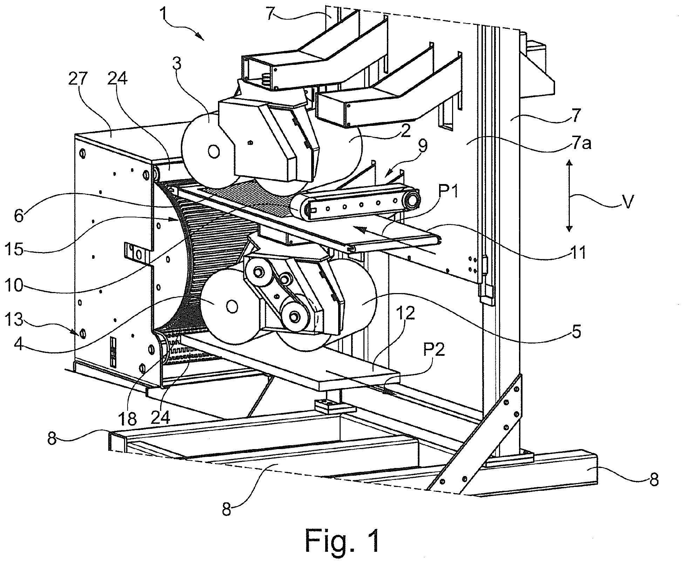

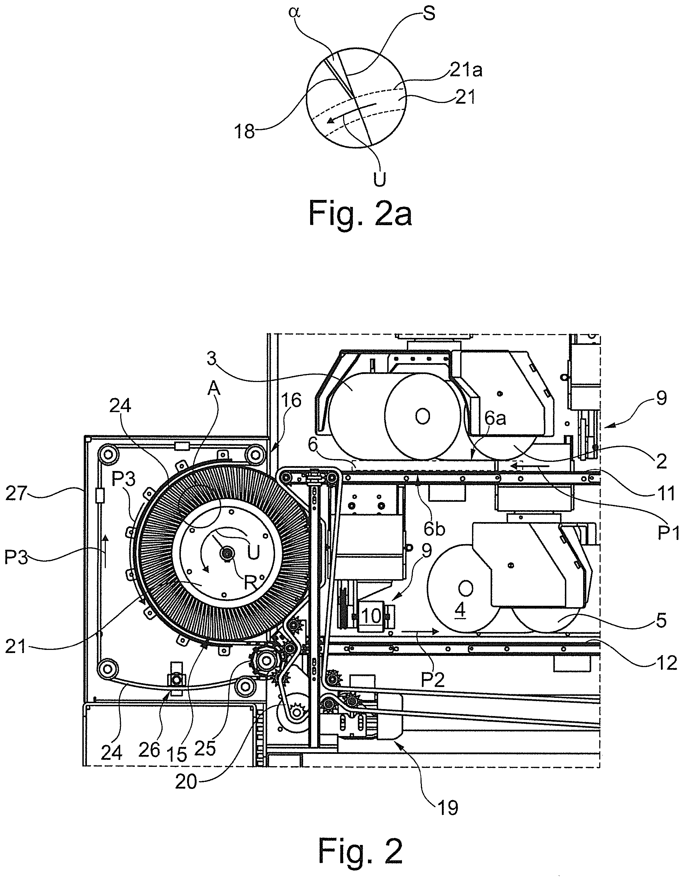

Figur 1 zeigt stark schematisch perspektivisch einen Ausschnitt einer erfindungsgemäßen Bearbeitungsvorrichtung 1, die als Kantenverrundungs-Vorrichtung ausgebildet ist und für einen Durchlaufbetrieb zur automatisierten Bearbeitung eines metallischen Werkstücks 6 ausgelegt ist. Die Bearbeitungsvorrichtung 1 eignet sich insbesondere zur Bearbeitung von plattenartigen Flachprofilen aus zum Beispiel einem Stahlmaterial mit Abmessungen im Bereich zwischen circa 20 x 20 x 1 Millimeter bis circa 200 x 200 x 20 Millimeter (Länge x Breite x Höhe bzw. Dicke). Die Werkstücke können z. B. Grobbleche sein, welche beispielsweise nach einem Schweiß-, Schneidtrenn- oder Laserverfahren scharfkantige Oberflächen- und Randverläufe aufweisen, welche für eine weiter Bearbeitung des Werkstücks wie eine Lackierung entfernt werden müssen, was durch die materialabtragende Bearbeitung durch das automatisierte maschinelle Abschleifen der Oberflächen bzw. ein Ab- bzw. Verrunden der Kanten des Werkstücks 6 erfolgt. Da sämtliche Oberflächen- bzw. Kantenbereiche am Werkstück 6 vollständig bearbeitet werden müssen, ist ein Wenden des Werkstücks 6 nach der Bearbeitung der ersten Hauptseite 6a (s. Figur 2) notwendig, damit auch die beim ersten Bearbeitungsschritt durch Auflage des Werkstücks 6 auf einer Auflagefläche verdeckten Oberflächenbereiche bzw. eine zweite gegenüberliegend Hauptseite 6b an dem Werkstück für die Oberflächenbearbeitung zugänglich bzw. frei sind. Zum Wenden des Werkstücks 6 umfasst die Bearbeitungsvorrichtung 1 eine erfindungsgemäße Wendevorrichtung 13 mit einer Wendeeinheit 14.

Die Bearbeitungsvorrichtung 1 weist oberhalb eines zum Werkstücktransport vorhandenen oberen umlaufenden Zuführbandes 11 zwei rotierende walzenartige Schleifelemente 2 und 3 und oberhalb eines zum Werkstücktransport vorhandenen unteren umlaufenden Zuführbandes 12 zwei rotierende walzenartige Schleifelemente 4 und 5 auf. Die zueinander parallel versetzten Schleifelemente 2 und 3 sind gemeinsam um eine vertikale Achse verstellbar, für eine gewünschte Anstellung der Schleifelemente 2 und 3 relativ zum Zuführband 11, gemäß deren Umlaufrichtung parallel, schräg oder quer zur Laufrichtung des Zuführbandes 11. Entsprechend sind die Schleifelemente 4 und 5 relativ zum Zuführband 12 einstellbar. In Figur 1 sind die Schleifelemente 2 und 3 bzw. 4 und 5 schräg zur Laufrichtung des jeweiligen Zuführbandes 11 bzw. 12.

Die Bearbeitung des Werkstücks 6 mit den Schleifelementen 2 und 3 bzw. 4 und 5 erfolgt entlang des Zuführweges des Werkstücks 6 auf den Zuführbändern 11 und 12 während der Förderbewegung des Werkstücks 6, wobei das Werkstück 6 aufliegend auf dem oberen Zuführband 11 in Transportrichtung P1 und aufliegend auf dem unteren Zuführband 12 in Transportrichtung P2 verfahren wird. Die jeweils rotierend um eine horizontale Achse angetrieben rotierbaren Schleifelemente 2 bis 5 sind insbesondere alle identisch zum Beispiel jeweils als Schleifmopeinrichtung zum Kantenverrunden ausgebildet.

In Transportrichtung P1 etwas beabstandet vor den Schleifelemente 2 und 3 und in Transportrichtung P2 vor den Schleifelemente 4 und 5 ist jeweils eine Querbearbeitungseinheit 9 mit einem angetrieben quer zur Transportrichtung P1 bzw. P2 umlaufenden Schleifband 10 vorhanden. Die Querbearbeitungseinheiten 9 dienen zur Entfernung von groben Überständen bzw. Graten am Werkstück 6.

Die Bearbeitungsvorrichtung 1 umfasst ein Gestell mit zwei vertikalen parallelen Holmen 7, zwischen denen sich ein Wandteil 7a aufspannt. An die Holme 7 schließen sich unten drei horizontal ausgerichtete Fußholme 8 an, die untereinander quer verbunden sind und über welche die Bearbeitungsvorrichtung 1 auf einer Bodenfläche aufstellbar ist.

Als Antrieb 19 für die Zuführbänder 11 und 12 der Bearbeitungsvorrichtung 1 dient ein Elektromotor, welcher ein um mehrere Rollen geführten Antriebsriemen 20 umlaufend antreibt, der wiederum die Zuführbänder 11 und 12 als auch ein umlaufendes Führungsband 24 antriebt, was weiter unten noch erklärt ist.

Die beiden Querbearbeitungseinheiten 9 wie auch die beiden oberen Schleifelemente 2, 3 und die beiden unteren Schleifelemente 4, 5 sind jeweils an der Bearbeitungsvorrichtung 1 in der vertikalen Richtung V veränderlich jedoch für den Bearbeitungsbetrieb fest einstellbar, um insbesondere eine Einwirktiefe der Schleifelemente 2 bis 5 an den Oberflächen des Werkstücks 6 abzustimmen, was von der Materialdicke und Form bzw. Kontur des Werkstücks 6 abhängt.

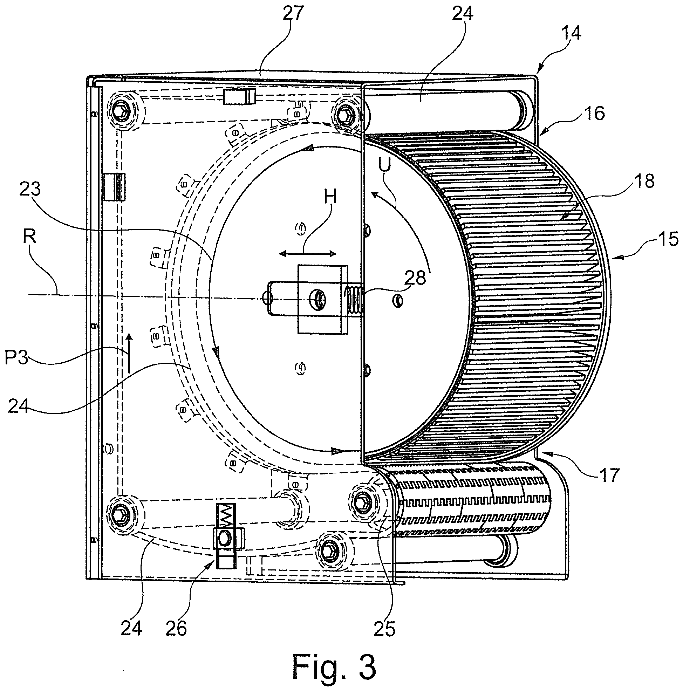

Damit das Werkstück 6 auf dem Zuführband 11, auf welchem es eine oberseitige Bearbeitung mit der Querbearbeitungseinheit 9 und den Schleifelementen 2 und 3 erfährt, auch an der Unterseite bearbeiten zu können, ist die erfindungsgemäße Wendevorrichtung 13 mit der Wendeeinheit 14 vorgesehen. Die Wendeeinheit 14 umfasst einen Wendekörper, der als motorisch angetriebene um die Achse R in der Umlaufrichtung U rotierende Wendewalze 15 ausgebildet ist (siehe Figur 3). Die Wendevorrichtung 13 ist zwischen dem oberen Zuführband 11 und dem unteren Zuführband 12 in einem vertikalen Zwischenbereich der vertikal versetzten Zuführbänder 11 und 12 vorhanden.

Die Wendevorrichtung 13 nimmt in einem obenliegenden umfänglichen Einlaufbereich 16 der Wendewalze 15 am in Bewegungsrichtung P1 hinteren Ende des Zuführbands 11 das Werkstück 6 vom Zuführband 11 mit der Wendewalze 15 auf.

Durch die Drehung der Wendewalze 15 in Richtung U wird das Werkstück 6 entlang eines halbkreisförmigen Bewegungsweges 23 am Außenumfang der Wendewalze 15 nach unten mitgenommen, wobei das Werkstück 6 in einen untenliegenden Auslassbereich 17 gelangt und um 180 Winkelgrade bezogen auf eine horizontale Achse bzw. auf den Zustand auf dem Zuführband 11 gewendet wird und auf das untere sich in Transportrichtung P2 bewegende Zuführband 12 gelangt. Auf dem Zuführband 12 aufliegend wird das gewendete Werkstück 6 zunächst an der unteren Querbearbeitungsvorrichtung 9 von dieser bearbeitend vorbeigeführt und dann an den unteren rotierenden Schleifelementen 4, 5 für eine weitergehende oberflächenseitige Bearbeitung, womit auch die bislang noch nicht bearbeiteten Oberflächen des Werkstücks 6 nach dem Passieren unterhalb der Schleifelemente 4, 5 vollends bearbeitet sind.

Gemäß der stark schematisierten Darstellung ist die Wendewalze 15 mit einer Vielzahl von hier beispielhaft als gleichartige Kontaktlamellen 18 ausgebildeten Kontaktmitteln versehen. Die Wendewalze 15 kann alternativ zu den quer zur Umlaufrichtung U ausgerichteten Kontaktlamellen 18 mit anderen Kontaktmitteln insbesondere mit dünnen länglichen Strahlelementen wie Kontaktborsten versehen sein, die vorteilhaft als eine Vielzahl von Borstenbündel vorhanden sind mit jeweils mehreren einzelnen zum Borstenbündel zusammengefassten Borsten. Die Kontaktlamellen 18 bzw. die Kontaktborsten sind gleichmäßig verteilt bzw. regelmäßig auf der gesamten umfänglichen und axialen Außenseite eines Walzenkörpers 21 der Wendewalze 15 vorhanden.

Der Außenumfang der Wendewalze 15 ist dem vertikalen Abstand zwischen den Zuführbändern 11 und 12 angepasst, wobei die Wendewalze 15 innen den zylinderförmigen Walzenkörper 21 aufweist, dessen zentrale Zylinderachse mit der Drehachse R zur Drehlagerung der drehend antreibbaren Wendewalze 15 zusammenfällt.

Wie insbesondere Figur 2 und 2a verdeutlicht, sind außen am Walzenkörper 21 über dessen gesamte zylindrische Mantelfläche 21a die Kontaktlamellen 18 gleich ausgerichtet vorhanden. Bezogen auf die jeweiligen Fußpunkte der Kontaktlamellen 18 auf der Mantelfläche 21a sind die Kontaktlamellen 18 entgegen der exakt zur Achse R radialen Ausrichtung gemäß der Linie S in Richtung der Umlaufsrichtung U der Wendewalze 15 um den Winkel α von circa 15 Winkelgrade geneigt (s. Figur 2a). Dies verringert das von der Wendewalze 15 aufzubringende Drehmoment im Moment der Aufnahme des Werkstücks 6 im Einlaufbereich 16 gegenüber einer exakt radialen Ausrichtung der Kontaktlamellen 18. In Figur 2a ist zur besseren Darstellung lediglich eine Kontaktlamelle 18 herausgegriffen dargestellt.

Entsprechend sind bei einer alternativen Ausführung der Wendewalze 15 mit Borsten die Kontaktborsten bzw. Borstenbündel der Wendewalze 19 vorteilhaft ebenfalls zur radialen Ausrichtung in Umlaufrichtung U um circa 15 Winkelgrade geneigt ausgerichtet.

Die ausgerichteten Kontaktlamellen 18 ermöglichen eine optimale Mitnahme des Werkstücks 6 vom Ende des oberen Zuführbandes 11, wobei die Kontaktmittel von unten gegen das Werkstück 6 drücken und dieses fixieren. Die flexiblen, ausweichbaren bzw. biegesteifen Kontaktmittel kommen im Einlaufbereich 16 in Kontakt mit dem Werkstück 6 und halten dieses während der Bewegung entlang des gekrümmten Bewegungsweges 23 vom Bereich 16 bis zum Bereich 17. Dabei sinkt das Werkstück 6 ggf. etwas in den Kontaktmitteln ein, was die Positionierung und das Festhalten des Werkstücks 6 begünstigt. Dadurch bleibt das Werkstück 6 in definierter Stellung beim Wendevorgang.

Damit das Werkstück 6 entlang des sich nach unten neigenden Bewegungsweges 23 beim Drehen der Wendewalze 15 nicht nach außen bzw. unten wegkippen kann, ist entlang des Bewegungsweges 23, außen gegenüber den freien Enden der Kontaktmittel bzw. der Kontaktlamellen 18, die als umlaufendes Führungsband 24 ausgestaltete Führungsanordnung vorhanden, die sich über den halben Umfang der Wendewalze 15 auf der dem Einlaufbereich 16 und dem Auslassbereich 17 bzw. den Zuführbändern 11, 12 abgewandten Seite vom Einlaufbereich 16 bis zum Auslassbereich 17 erstreckt.

Das in Richtung P3 umlaufende angetriebene Führungsband 24 ist entlang mehrerer Rollen geführt, welche eine angetriebene Antriebswalze 25 umfasst, die z. B. durch den Antrieb 19 angetrieben wird.

Um eine geringe Ausweichbewegung der Wendewalze 15 in horizontaler Richtung H (s. Figur 3) relativ zu einem feststehenden Gehäuse 27 der Wendeeinheit 14 zu ermöglichen, ist die Wendewalze 15 im Bereich ihrer Drehachse R über eine vorgespannte Feder 28 am Gehäuse 27 federnd aufgenommen. Dieser Sicherheitsaspekt, wenn zum Beispiel ein Benutzer ein zu großes Werkstück einfügt, das sich zwischen der Wendewalze 15 und dem umgebenden Führungsband 24 einklemmen würde, erfolgt bei einer Verschiebung der verschiebbar gelagerten Wendewalze 15 um einen vorgegebenen Wert eine Abschaltung der Bearbeitungsvorrichtung 1, mit dem Hinweis "zu großes Werkstück".

Des Weiteren ist eine Spanneinrichtung 26 für eine Einstellung einer Bandspannung des Führungsbandes 24 vorgesehen.

Vorteilhafterweise ist die Einheit mit den Schleifelementen 2, 3, die Einheit mit den Schleifelementen 4, 5 und jeweils die Querbearbeitungseinheiten 9 relativ zum Wandteil 7a in vertikale Richtung V verstellbar.

Zusätzlich ist es vorteilhaft, wenn das umgebende Förderband eine Spanneinrichtung aufweist, damit dieses mit einer gleichbleibenden Zugspannung arbeitet.

Auch ist es von Vorteil, wenn die Wendeeinrichtung 13 wegklappbar ausgestaltet ist, damit der verbleibende Teil der Bearbeitungsvorrichtung 1 zumindest auf einer Ebene ohne Wendearbeit arbeiten kann, um beispielsweise größere Werkstücke, die außerhalb der Auslegung der Wendeeinrichtung 13 liegen, noch bearbeiten zu können.

### Bezugszeichenliste:

- 1: Bearbeitungsvorrichtung
- 2: Schleifelement
- 3: Schleifelement
- 4: Schleifelement
- 5: Schleifelement
- 6: Werkstück
- 6a, 6b: Hauptseite
- 7: Holm
- 7a: Wandteil
- 8: Fußholm
- 9: Querbearbeitungseinheit
- 10: Schleifband
- 11: Zuführband
- 12: Zuführband
- 13: Wendevorrichtung
- 14: Wendeeinheit
- 15: Wendewalze
- 16: Einlaufbereich
- 17: Auslassbereich
- 18: Kontaktlamellen
- 19: Antrieb
- 20: Antriebsriemen
- 21: Walzenkörper
- 21a: Mantelfläche
- 22: Federelement
- 23: Bewegungsweg
- 24: Führungsband
- 25: Antriebswalze
- 26: Spanneinrichtung
- 27: Gehäuse
- 28: Feder

## Patentansprüche

1. Vorrichtung (13) mit einer Wendeeinheit (14) zum Wenden eines Werkstücks (6), wobei die Wendeeinheit (14) einen antreibbar bewegbaren Wendekörper mit Kontaktmitteln (18) umfasst, welche mit der Bewegung des Wendekörpers auf einem gekrümmten Bewegungsweg (23) bewegbar sind, sowie eine Führungsanordnung für eine Führung des Werkstücks (6) beim Wendevorgang aufweist, die benachbart zu den Kontaktmitteln (18) entlang des gekrümmten Bewegungsweges (23) ausgebildet ist, so dass bei einem Wendevorgang die Kontaktmittel (18) mit dem Werkstück (6) derart in einen andrückenden Kontakt bringbar sind, dass bei dem Wendevorgang das Werkstück (6) entlang des gekrümmten Bewegungsweges (23) mitführbar ist, wobei die Wendeeinheit (14) ausgebildet ist, plattenförmige metallische Werkstücke (6) zu wenden, **dadurch gekennzeichnet, dass** die Kontaktmittel eine Mehrzahl von länglichen Strahlelementen umfassen, welche mehrere Bündel von Strahlelementen umfassen, die jeweils aus mehreren Strahlelementen gebildet sind, wobei die Führungsanordnung angetrieben bewegbar ist.

2. Vorrichtung nach Anspruch 1, **dadurch gekennzeichnet, dass** die Wendeeinheit (14) ausgelegt ist, ein plattenartiges metallisches Werkstück (6) zu wenden, das ein Breitenmaß und ein Längenmaß aufweist, das in einem Bereich zwischen circa 20 Millimeter und circa 280 Millimeter liegt und ein Dickenmaß in einem Bereich von circa einem Millimeter bis circa 20 Millimeter aufweist.

3. Vorrichtung nach einem der vorhergehenden Ansprüche, **dadurch gekennzeichnet, dass** die Wendeeinheit (14) einen walzenförmigen und um eine Achse rotierend antreibbaren Wendekörper (15) umfasst.

4. Vorrichtung nach einem der vorhergehenden Ansprüche, **dadurch gekennzeichnet, dass** die Führungsanordnung ein angetrieben umlaufendes Bandelement (24) umfasst.

5. Vorrichtung nach einem der vorhergehenden Ansprüche, **dadurch gekennzeichnet, dass** die Wendeeinheit (14) einen um eine Rotationsachse rotierbaren Wendekörper (15) aufweist, der umfänglich mit radial sich erstreckenden Kontaktelementen (18) der Kontaktmittel ausgebildet ist.

6. Vorrichtung nach einem der vorhergehenden Ansprüche, **dadurch gekennzeichnet, dass** am Wendekörper (15) die Strahlelemente mit ihrer Längsachse in Bewegungsrichtung des Wendekörpers mit einem Winkel geneigt sind, vorzugsweise um circa 15 Winkelgrade relativ zu einer radialen Richtung ausgerichtet vorhanden sind.

7. Vorrichtung nach einem der vorhergehenden Ansprüche, **dadurch gekennzeichnet, dass** die Kontaktmittel eine Mehrzahl von länglichen Strahlelementen umfassen, welche nachgiebig ausgestaltet sind.

8. Vorrichtung nach einem der vorhergehenden Ansprüche, **dadurch gekennzeichnet, dass** die Kontaktmittel aus einer Mehrzahl von länglichen Strahlelementen gebildet sind, welche nicht gebündelt vorhanden sind.

9. Bearbeitungsvorrichtung (1) zum automatisierten Bearbeiten von Oberflächen von Werkstücken (6), vorzugsweise von plattenförmigen metallischen Werkstücken (6), insbesondere zum Verrunden von Werkstückkanten und/oder zum Abschleifen von Werkstückoberflächen (6a, 6b), mit einer Transportanordnung (11, 12) zum Bewegen des Werkstücks (6) entlang eines Bearbeitungsweges der Bearbeitungsvorrichtung (1) und mit angetrieben bewegbaren Bearbeitungseinheiten (2-5, 9) zum Einwirken auf das Werkstück (6), **dadurch gekennzeichnet dass** zwischen einer ersten Bearbeitungseinheit (2, 3) zum automatisierten Bearbeiten einer Oberseite (6a) des Werkstücks (6) und einer zweiten Bearbeitungseinheit (4, 5) zum automatisierten Bearbeiten einer Unterseite (6b) des Werkstücks (6) eine Vorrichtung (13) nach einem der vorhergehenden Ansprüche vorhanden ist.

## Claims

1. Device (13) comprising a turning unit (14) for turning a workpiece (6), wherein the turning unit (14) comprises a driveably movable turning body with contact means (18) which can be moved along a curved movement path (23) with the movement of the turning body, as well as a guide arrangement for guiding the workpiece (6) during the turning operation which is formed adjacent to the contact means (18) along the curved movement path (23), so that during the turning process the contact means (18) can be brought into pressing contact with the workpiece (6) such that during the turning process the workpiece (6) can be guided along the curved movement path (23), wherein the turning unit (14) is designed to turn plate-like metal workpieces (6), **characterised in that** the contact means comprise a plurality of elongated radiating elements which comprise several bundles of radiating elements which are each formed by several radiating elements, wherein the guide arrangement can be moved in a driven manner.

2. Device according to claim 1, **characterised in that** the turning unit (14) is designed to turn a plate-like metal workpiece (6) which has a width dimension and a length dimension which is in a range between about 20 millimetres and about 280 millimetres and has a thickness dimension in a range of about one millimetre to about 20 millimetres.

3. Device according to any of the preceding claims, **characterised in that** the turning unit (14) comprises a cylindrical turning body (15) which can be driven to rotate about an axis.

4. Device according to any of the preceding claims, **characterised in that** the guide arrangement comprises a driven circulating belt element (24).

5. Device according to any of the preceding claims, **characterised in that** the turning unit (14) comprises a turning body (15) which is rotatable about an axis of rotation, which turning body is configured at the circumference to have radially extending contact elements (18) of the contact means.

6. Device according to any of the preceding claims, **characterised in that** on the turning body (15) the radiating elements are inclined at an angle with their longitudinal axis in the direction of movement of the turning body, preferably are aligned at an angle of about 15 degrees relative to a radial direction.

7. Device according to any of the preceding claims, **characterised in that** the contact means comprise a plurality of elongated radiating elements, which are designed to be yielding.

8. Device according to any of the preceding claims, **characterised in that** the contact means are formed by a plurality of elongated radiating elements which are not provided in bundles.

9. Machining device (1) for the automated machining of surfaces of workpieces (6), preferably of plate-like metal workpieces (6), in particular for rounding workpiece edges and/or for grinding down workpiece surfaces (6a, 6b), with a transport arrangement (11, 12) for moving the workpiece (6) along a machining path of the machining device (1) and with machining units (2-5, 9), which are movable in a driven manner, for acting on the workpiece (6), **characterised in that** a device (13) according to any of the preceding claims is provided between a first machining unit (2, 3) for the automated machining of an upper surface (6a) of the workpiece (6) and a second machining unit (4, 5) for the automated machining of a lower surface (6b) of the workpiece (6).

## Revendications

1. Dispositif (13) comprenant une unité de retournement (14) pour retourner une pièce à usiner (6), l'unité de retournement (14) comprenant un corps de retournement mobile par entraînement et muni de moyens de contact (18) qui sont mobiles conjointement au déplacement du corps de retournement le long d'une trajectoire incurvée (23), ainsi qu'un dispositif de guidage pour guider la pièce à usiner (6) lors du processus de retournement, lequel dispositif est formé à proximité des moyens de contact (18) le long de la trajectoire incurvée (23), de telle sorte que, lors d'un processus de retournement, les moyens de contact (18) peuvent être mis en contact par pression avec la pièce à usiner (6) de telle manière que, lors du processus de retournement, la pièce à usiner (6) peut être guidée le long de la trajectoire incurvée (23), l'unité de retournement (14) étant conçue pour tourner des pièces à usiner métalliques (6) en forme de plaques, **caractérisé en ce que** les moyens de contact comprennent une pluralité d'éléments radiaux allongés qui comprennent plusieurs faisceaux d'éléments radiaux formés chacun de plusieurs éléments radiaux, le dispositif de guidage étant mobile par entraînement.

2. Dispositif selon la revendication 1, **caractérisé en ce que** l'unité de retournement (14) est conçue pour retourner une pièce à usiner métallique (6) en forme de plaque dont la mesure de largeur et la mesure de longueur sont comprises dans un domaine entre environ 20 mm et environ 280 mm, et dont la mesure d'épaisseur est comprise dans un domaine entre environ 1 mm et environ 20 mm.

3. Dispositif selon l'une des revendications précédentes, **caractérisé en ce que** l'unité de retournement (14) comprend un corps de retournement cylindrique (15) qui peut être entraîné en rotation autour d'un axe.

4. Dispositif selon l'une des revendications précédentes, **caractérisé en ce que** le dispositif de guidage comprend un élément de bande rotatif par entraînement (24).

5. Dispositif selon l'une des revendications précédentes, **caractérisé en ce que** l'unité de retournement (14) comprend un corps de retournement (15) qui peut tourner autour d'un axe de rotation et qui est formé avec, sur sa circonférence, des éléments de contact (18) des moyens de contact qui s'étendent radialement.

6. Dispositif selon l'une des revendications précédentes, **caractérisé en ce que** sur le corps de retournement (15), les éléments radiaux sont inclinés avec leur axe longitudinal d'un angle dans la direction de déplacement du corps de retournement, de préférence les éléments radiaux sont orientés d'environ 15 degrés par rapport à une direction radiale.

7. Dispositif selon l'une des revendications précédentes, **caractérisé en ce que** les moyens de contact comprennent une pluralité d'éléments radiaux allongés qui sont conçus pour être souples.

8. Dispositif selon l'une des revendications précédentes, **caractérisé en ce que** les moyens de contact sont formés d'une pluralité d'éléments radiaux allongés qui ne sont pas en faisceaux.

9. Dispositif d'usinage (1) pour l'usinage automatisé de surfaces de pièces à usiner (6), de préférence de pièces à usiner métalliques (6) en forme de plaques, en particulier pour arrondir des bords de pièces à usiner et/ou pour meuler des surfaces de pièces à usiner (6a, 6b), comprenant un dispositif de transport (11, 12) pour déplacer la pièce à usiner (6) le long d'une trajectoire de travail du dispositif d'usinage (1), et des unités d'usinage (2 - 5, 9) mobiles par entraînement pour agir sur la pièce à usiner (6), **caractérisé en ce qu'**un dispositif (13) selon l'une des revendications précédentes est présent entre une première unité d'usinage (2, 3) pour l'usinage automatique d'une face supérieure (6a) de la pièce à usiner (6), et une deuxième unité d'usinage (4, 5) pour l'usinage automatique d'une face inférieure (6b) de la pièce à usiner (6).
